(19) **Europäisches Patentamt European Patent Office Office européen des brevets**

(11) **EP 4 013 013 B1**

(12) **FASCICULE DE BREVET EUROPEEN**

(45) Date de publication et mention de la délivrance du brevet:
**04.03.2026 Bulletin 2026/10**

(51) Classification Internationale des Brevets (IPC):
**H04L 41/0631** (2022.01)    **H04L 41/0654** (2022.01)
**H04L 43/0811** (2022.01)    **H04L 43/12** (2022.01)

(21) Numéro de dépôt: **21212871.4**

(52) Classification Coopérative des Brevets (CPC):
**H04L 41/064; H04L 41/0654;** H04L 43/0811;
H04L 43/12

(22) Date de dépôt: **07.12.2021**

(54) **PROCÉDÉ ET SYSTÈME DE DÉTECTION D'INCIDENTS DANS AU MOINS UN RÉSEAU LOCAL DE COMMUNICATION**

VERFAHREN UND SYSTEM ZUR ERKENNUNG VON STÖRUNGEN IN MINDESTENS EINEM LOKALEN KOMMUNIKATIONSNETZ

METHOD AND SYSTEM FOR DETECTING INCIDENTS IN AT LEAST ONE LOCAL COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2020 FR 2012908**

(43) Date de publication de la demande:
**15.06.2022 Bulletin 2022/24**

(73) Titulaire: **Sagemcom Broadband SAS 92270 Bois-Colombes (FR)**

(72) Inventeurs:
• **BEN HAMIDA, Elyes 92500 RUEIL MALMAISON (FR)**
• **PAROLINI, Maxime 92500 RUEIL MALMAISON (FR)**

(74) Mandataire: **Cabinet Le Guen Maillet 3, impasse de la Vigie CS 71840 35418 Saint-Malo Cedex (FR)**

(56) Documents cités:
**US-A1- 2010 027 432     US-A1- 2010 274 616
US-A1- 2020 267 057**

## Description

DOMAINE TECHNIQUE

ETAT DE LA TECHNIQUE ANTERIEURE

Les réseaux locaux à l'origine principalement implantés dans des entreprises se sont développés de manière très importante dans les habitations. Ces réseaux locaux, qu'ils soient filaires et/ou sans fils permettent à des usagers d'accéder aux services proposés par des réseaux étendus tels que par exemple le réseau internet.

Les services sont par exemple proposés par des fournisseurs d'accès internet qui en outre fournissent au moins en partie les différents éléments qui permettent la constitution du réseau local.

Lorsqu'un incident survient dans un réseau local, les usagers de ce réseau local font appel aux services techniques de l'opérateur afin que l'incident soit solutionné. Pour se différencier et capter plus de valeur dans ce marché hautement concurrentiel, les fournisseurs d'accès internet doivent offrir la meilleure expérience numérique à domicile en étant capables de rapidement diagnostiquer un incident et de pouvoir résoudre celui-ci le plus rapidement possible.

Le diagnostic et la résolution d'un incident à distance offrent cette rapidité.

La demande de brevet US 2010/274616 divulgue un procédé de détection d'incidents dans un réseau local.

La demande de brevet US 2020/267057 divulgue un procédé de détection d'incidents.

La demande de brevet US 2010/027432 divulgue un procédé de détection d'incidents dans un réseau.

EXPOSE DE L'INVENTION

A cette fin, selon un premier aspect, l'invention propose un procédé de détection d'incidents dans un réseau local par un dispositif de détection d'incidents, le dispositif de détection d'incidents étant relié au réseau local par l'intermédiaire d'un réseau étendu, le réseau local comportant un agent de collecte de données collectant des données descriptives des connexions entre des stations et des nœuds du réseau local et des données descriptives des connexions entre les nœuds, le dispositif de détection d'incidents étant apte à détecter différents types d'anomalies et le procédé comporte les étapes effectuées par le dispositif de détection d'incidents de :

- réception (E50) de messages de l'agent de collecte, validation et agrégation des données descriptives des connexions entre les stations et les nœuds et les données descriptives des connexions entre les nœuds comprises dans chaque message reçu en groupes de données, les données étant agrégées en partitionnant les données selon une périodicité prédéterminée et :

- calcul (E51) pour chaque groupe de données et pour chaque type d'anomalies, d'un score de sévérité à partir de valeurs prédéterminées représentatives d'un fonctionnement ou d'un comportement normal, et calcul d'un score de sévérité totale pour chaque groupe de données à partir des scores de sévérité calculés pour le groupe de données,
- calcul (E53) sur l'ensemble des scores de sévérité totale des groupes de données agrégés pendant une durée prédéterminée d'un score de criticité totale, la durée prédéterminée étant telle qu'une pluralité de groupes de données sont agrégés pendant la durée prédéterminée, le score de criticité totale est calculé à partir de la somme des scores de sévérités totales pondérés par la durée des groupes des données,
- génération (E54) de messages de recommandations ou d'actions correctives au moins en analysant le score de criticité totale,

caractérisé en ce que :

si, dans une partition, aucun changement de caractéristique de fonctionnement d'un lien n'apparaît, un groupe de données est formé, le groupe de données comprenant l'ensemble des données de la partition et,

à chaque changement d'au moins une caractéristique de fonctionnement d'un lien dans la partition, la caractéristique de fonctionnement du lien étant la bande de fréquence du lien, le protocole de communication du lien, le canal du lien, un groupe de données est formé qui comprend les données de la partition correspondant à la bande de fréquence du lien, au protocole de communication du lien, au canal du lien.

L'invention concerne aussi un dispositif de détection d'incidents dans un réseau local, le dispositif de détection d'incidents étant relié au réseau local par l'intermédiaire d'un réseau étendu, le réseau local comportant un agent de collecte de données collectant des données descriptives des connexions entre des stations et des nœuds du réseau local et des données descriptives des connexions entre les nœuds, le dispositif de détection d'incidents étant apte à détecter différents types d'anomalies et le dispositif de détection d'incidents comporte :

- des moyens de réception de messages de l'agent de collecte, validation et agrégation des données descriptives des connexions entre les stations et les nœuds et les données descriptives des connexions entre les nœuds comprises dans chaque message reçu en groupes de données, les données étant agrégées en partitionnant les données selon une périodicité prédéterminée et :

- des moyens de calcul pour chaque groupe de données, pour chaque type d'anomalie d'un score de sévérité à partir de valeurs prédéterminées représentatives d'un fonctionnement ou d'un comportement normal, et calcul d'un score de sévérité totale pour chaque groupe de données à partir des scores de sévérité calculés pour le groupe de données,
- des moyens de calcul sur l'ensemble des scores de sévérité totale des groupes de données agrégés pendant une durée prédéterminée d'un score de criticité totale, la durée prédéterminée étant telle qu'une pluralité de groupes de données sont agrégés pendant la durée prédéterminée, le score de criticité totale est calculé à partir de la somme des scores de sévérités totales pondérés par la durée des groupes des données,
- des moyens de génération de messages de recommandations ou d'actions correctives au moins en analysant score de criticité totale,

caractérisé en ce que :

si, dans une partition, aucun changement de caractéristique de fonctionnement d'un lien n'apparaît, un groupe de données est formé, le groupe de données comprenant l'ensemble des données de la partition et,

à chaque changement d'au moins une caractéristique de fonctionnement d'un lien dans la partition, la caractéristique de fonctionnement du lien étant la bande de fréquence du lien, le protocole de communication du lien, le canal du lien, un groupe de données est formé qui comprend les données de la partition correspondant à la bande de fréquence du lien, au protocole de communication du lien, au canal du lien.

Ainsi, la présente invention permet de diagnostiquer rapidement un incident et de pouvoir résoudre celui-ci le plus rapidement possible à distance.

Selon un mode particulier de l'invention, le procédé comporte en outre une étape de calcul de la moyenne des scores de sévérités totales pondérés par la durée des groupes des données pour obtenir un score de santé du réseau local.

Selon un mode particulier de l'invention, les recommandations ou actions correctives sont en outre générées à partir du score de santé totale selon la formule suivante :

$$H = 1 - \frac{\sum_{liens} t_i \times s'_i}{\sum_{liens} t_i}$$

où $t_i$ est la durée de connexion du groupe $i$, $s'_i$ le score de sévérité totale du groupe de données.

Selon un mode particulier de l'invention, le réseau local est composé d'éléments et des scores de sévérités, des scores de sévérité totale, des scores de criticité totale et des scores de santé sont calculés pour au moins une partie des éléments du réseau local, un élément du réseau local un nœud ou un lien.

Selon un mode particulier de l'invention, les recommandations ou actions correctives sont en outre générées à partir des scores calculés pour la au moins une partie du réseau local.

Selon un mode particulier de l'invention, la caractéristique de fonctionnement du lien est une bande de fréquence, un canal, un protocole de communication.

Selon un mode particulier de l'invention, la valeur du score de sévérité est bornée par la valeur 0 et la valeur 1.

Ainsi la présente invention permet de combiner aisément différents scores de sévérité.

Selon un mode particulier de l'invention, chaque score de sévérité totale est borné par la valeur 0 et la valeur 1 et est égale à la valeur 1 dès qu'un score de sévérité est égal à 1.

Ainsi, le score de sévérité totale reflète une anomalie sévère.

Selon un mode particulier de l'invention, les recommandations sont des invitations à rapprocher une station d'un nœud du réseau local ou à ajouter un nœud dans le réseau local ou à déplacer un nœud du réseau local ou de modifier un canal à utiliser de modifier des seuils d'algorithmes locaux qui engendrent les changements de canaux ou à supprimer des sources de bruit ou à restaurer une configuration du protocole de communication et les actions correctives sont des modification de canaux ou des modifications de seuils d'algorithmes locaux qui engendrent les changements de canaux.

La présente invention concerne aussi un produit programme d'ordinateur. Il comprend des instructions pour implémenter, par un dispositif nœud, le procédé selon l'un des modes de réalisation précédents, lorsque ledit programme est exécuté par un processeur du dispositif nœud.

La présente invention concerne aussi un support de stockage. Il stocke un programme d'ordinateur comprenant des instructions pour implémenter, par un dispositif nœud, le procédé selon l'un des modes de réalisation précédents, lorsque ledit programme est exécuté par un processeur du dispositif nœud.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un système de télécommunication dans lequel la présente invention est implémentée ;
[Fig. 2] illustre schématiquement un exemple d'architecture matérielle d'un dispositif de détection d'incidents dans au moins un réseau local ;
[Fig. 3] illustre schématiquement un exemple d'agrégation de données selon la présente invention ;
[Fig. 4] illustre le principe de calcul de la criticité d'un incident par un module de détection d'incidents et de calcul de scores de criticité ;
[Fig. 5] illustre schématiquement un procédé de détection d'incidents selon la présente invention.

EXPOSE DETAILLE DE MODES DE REALISATION

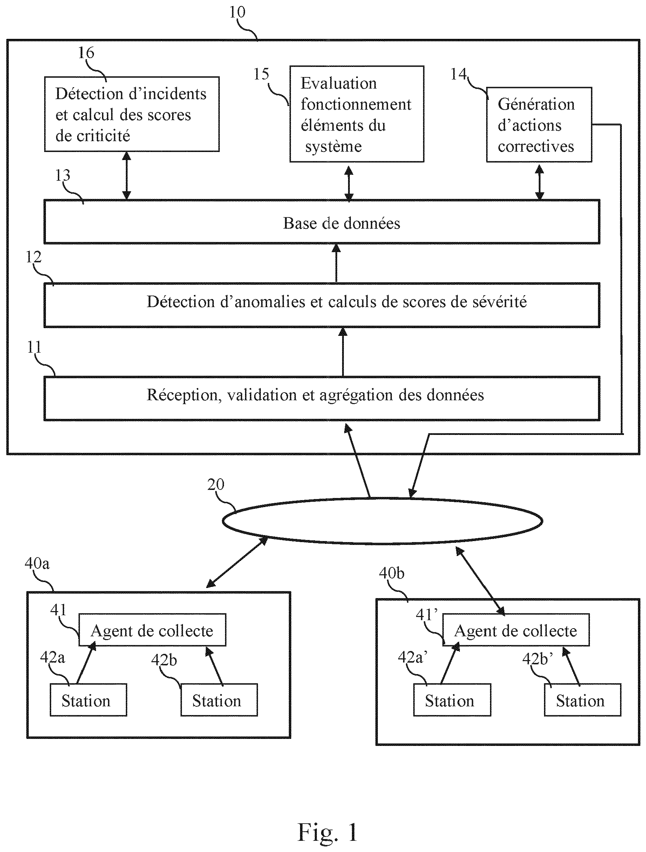

La **Fig. 1** illustre schématiquement un système de télécommunication dans lequel la présente invention est implémenté.

Dans la Fig. 1, un dispositif de détection d'incidents 10 est relié par l'intermédiaire d'un réseau étendu 20 (Wide Area Network en anglais) à des réseaux locaux 40 (LAN en anglais). Par exemple les réseaux locaux 40 sont des réseaux domestiques filaire et/ou sans fils. Seulement deux réseaux domestiques 40a et 40b sont représentés en Fig. 1 par souci de simplification. Dans un exemple particulier, les réseaux locaux 40a et 40b sont des réseaux sans fils de type Wi-Fi.

Dans l'exemple de la Fig. 1, un seul dispositif de détection d'incidents 10 est représenté. Le dispositif de détection d'incidents est dans un nuage informatique appelé CLOUD en anglais.

Les différents éléments constitutifs du dispositif de détection d'incidents 10 peuvent être répartis dans différents dispositifs informatiques compris dans le nuage informatique.

Le réseau étendu 20 est par exemple un réseau de type internet.

Dans l'exemple de la Fig. 1, le réseau local 40a comporte deux stations 42a, 42b et un point d'accès ou nœud relié au réseau étendu qui fait office d'agent de collecte 41de données dans le réseau local 40a. Le réseau local 40b comporte deux stations 42a', 42b' et un point d'accès relié au réseau étendu qui fait office d'agent 41' de collecte de données dans le réseau local 40b.

Les points d'accès sont par exemple des passerelles entre le réseau étendu 20 et les réseaux locaux 40a ou 40b.

Il est à remarquer ici que chaque nœud peut collecter des données dans le réseau local 40. L'implantation du point d'accès, et des stations dans un logement peut être génératrice d'incidents, comme la taille, la constitution du logement, et le nombre de stations.

De même, dans un réseau local sans fil de type Wi-Fi, des interférences avec des réseaux adjacents ou des dispositifs émettant des ondes radio électriques dans une même bande de fréquence peuvent apparaître.

L'utilisation dans un même réseau local de plusieurs services tels que la lecture en continu (streaming en anglais), la domotique, la télévision sur internet, les jeux en ligne, l'internet des objets, etc. peut aussi perturber certains de ces services.

Le ou chaque agent de collecte obtient des données descriptives des connexions entre des stations et des nœuds du réseau local et des données descriptives des connexions entre les nœuds liées à la qualité et à l'usage du réseau local. Ces données sont collectées à intervalles réguliers et sont stockées localement au niveau de chaque nœud. Ces données sont ensuite envoyées, à intervalles réguliers, par chaque nœud à l'agent de collecte qui groupe celles-ci en un seul message qui est transmis vers le dispositif de détection d'incidents 10 par l'intermédiaire du réseau étendu.

En variante, les données peuvent être collectées au niveau d'un nœud central, tel qu'une passerelle internet comprenant l'agent de collecte, groupées en un seul message qui est envoyé au dispositif de détection d'incidents 10.

Les données collectées sont par exemple mais non limitativement, la liste des nœuds du réseau local et leur fonction, par exemple, passerelle internet, répéteur Wi-Fi, boîtier décodeur ainsi que leurs données descriptives, par exemple la version logicielle, l'adresse IP, l'adresse MAC, le ou les standards Wi-Fi supportés, la bande Wi-Fi utilisée.

Les données collectées sont par exemple mais non limitativement la liste des connexions ou liens entre les stations et les nœuds, la liste des connexions entre les nœuds ainsi que leurs données descriptives, par exemple un horodatage, une puissance du signal ou RSSI (acronyme du terme en anglais Received Signal Strength Indicator), un niveau du bruit, un volume d'octets envoyés et/ou reçus, l'utilisation du ou des canaux radio, la bande de fréquence, le nombre de paquets transmis et/ou reçus et/ou perdus et/ou retransmis.

D'autres métriques représentatives du fonctionnement nominal de chacun des équipements, tels que les nœuds ou les stations dans le réseau local, peuvent être également envisagées. Par ailleurs, ces équipements peuvent être connectés via la technologie sans fil de type Wi-Fi, mais aussi une technologie de type BlueTooth, ou une technologie d'accès filaire telle que Ethernet ou par courant porteur de ligne. Dans un exemple, une métrique représentative de la consommation en énergie d'un équipement peut être collectée. Dans un autre exemple, une métrique de vitesse de lien Ethernet 10 Mbps / 100 Mbps / 1000 Mbps peut également être collectée.

Les données collectées sont agrégées en un message et sont envoyées par exemple dans un format JSON (acronyme de JavaScript Object Notation en utilisant un protocole de communication, tel que par exemple, le protocole HTTP (Hypertext Transfer Protocol) ou MQTT (Message Queuing Telemetry Transport).

Il est à remarquer ici qu'en variante, le message est envoyé à des instants prédéterminés et/ou à la demande du dispositif de détection d'incidents 10.

Le dispositif de détection d'incidents 10 comporte un module de réception, validation et d'agrégation des données 11 qui reçoit et traite chaque message reçu.

Le module de réception, validation et d'agrégation des données 11 valide le contenu de chaque message reçu par exemple en vérifiant si le format du message reçu est conforme, si les valeurs des informations comprises dans le message reçu sont dans une plage de valeur cohérente et si le réseau local dont est issu le message fait partie de l'ensemble des réseaux locaux géré par le dispositif de détection d'incidents 10.

Dans l'affirmative, le module de réception, validation et d'agrégation des données 11 agrège en groupes de données les données descriptives des connexions entre les stations et les nœuds et les données descriptives des connexions entre les nœuds.

Par exemple, les données sont partitionnées selon une périodicité prédéterminée, par exemple égale à 10mn.

Si, dans une partition, aucun changement de caractéristique de fonctionnement d'un lien n'apparaît, un groupe de données est formé, le groupe de données comprenant l'ensemble des données de la partition.

Dans chaque partition, à chaque changement d'au moins une caractéristique de fonctionnement d'un lien, un groupe de données est formé, qui comprend les données de la partition correspondant à la bande de fréquence, au canal et au protocole de communication. Une caractéristique de fonctionnement d'un lien est par exemple et non limitativement, la bande de fréquence, le canal et le protocole de communication tel que par exemple le protocole Wi-Fi

Plus précisément, un groupe de données comporte des données, pendant une durée de 10 mn, obtenues pour la bande de fréquence et le canal et le protocole de communication utilisés pendant ladite période prédéterminée. Un groupe de données comporte, pendant une durée d'utilisation de la même bande de fréquence, du même canal et du même protocole de communication utilisé, les données obtenues pour la bande de fréquence et le canal et le protocole de communication utilisés.

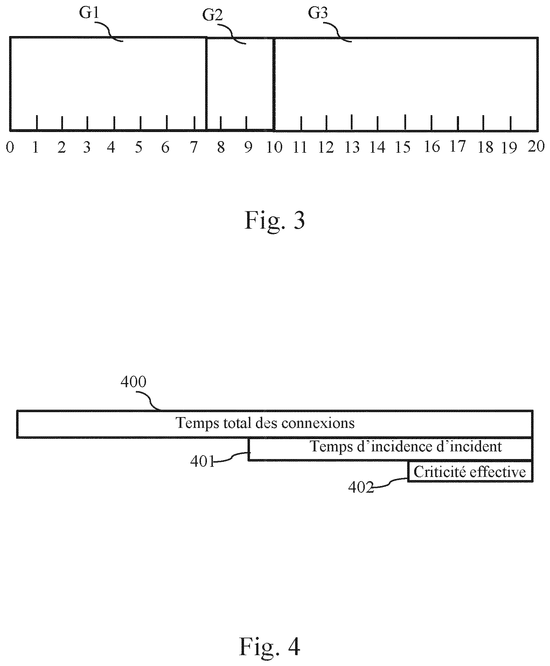

Un exemple d'agrégation est donné en référence à la Fig. 3.

La Fig. 3 illustre schématiquement un exemple d'agrégation de données selon la présente invention.

Dans l'exemple de la Fig. 3, les données reçues pendant les dix premières minutes notées 0 à 9 ne sont pas obtenues pour la même bande de fréquence, pour le même canal et pour le même protocole de communication utilisé, deux groupes notés G1 et G2 sont formés.

Le groupe G1 comporte les données obtenues sur la bande de fréquence 2,4 GHz, le canal 1 et le protocole 802.11g. Le groupe G2 comporte les données obtenues sur la bande de fréquence 2,4 GHz, le canal 6 et le protocole 802.11g.

Les données reçues pendant les dix minutes suivantes notées 10 à 19 sont obtenues pour la même bande de fréquence, pour le même canal et pour le même protocole de communication utilisé. Le groupe G3 est formé.

Le groupe G3 comporte les données obtenues sur la bande de fréquence 2,4 GHz, le canal 6 et le protocole 802.11g.

Les groupes servent ainsi à lisser les données envoyées par les nœuds en les agrégeant. Pour chaque groupe de données, on calcule la variation des compteurs de volumes d'octets et de paquets au sein du groupe, ainsi que le minimum, le maximum et la moyenne d'un certain nombre de métriques telles que par exemple le RSSI, le bruit...

Le dispositif de détection d'incidents 10 comporte un module de détection d'anomalies et de calcul de scores de sévérité 12.

Le module de détection d'anomalies et de calcul de scores de sévérité 12 détecte pour chaque groupe de données et chaque type d'anomalies calcule un score borné entre 0 et 1 appelé sévérité pour les différentes métriques.

Le score de sévérité permet d'évaluer l'écart de ces métriques à des valeurs prédéterminées représentatives d'un fonctionnement ou comportement normal.

Un score de sévérité de 0 signifie qu'il n'y a pas d'anomalie, un score de sévérité de 1 signifie une perturbation importante sur le lien Wi-Fi pour le groupe.

Par exemple, le score de sévérité de l'anomalie de type « couverture Wi-Fi » vaut 0 pour un RSSI supérieur ou égal à -60 dBm et croît linéairement jusqu'à 1 pour un RSSI de -80 dBm et au-delà.

En effet, un niveau de RSSI à -60 dBm peut être représentatif d'une bonne qualité de réception de signal par l'une des stations dont les données relatives au RSSI sont incorporées dans l'un des groupes. Un niveau de RSSI perçu à -80 dBm est représentatif d'une réception de signal bruitée par rapport à un niveau de -60 dBm, ce qui peut induire ou dénoter d'une dégradation des transmissions au sein du réseau local 40

Par exemple, le score de sévérité de l'anomalie de type « niveau de bruit » pour un nœud vaut 0 pour un bruit inférieur ou égal à -80 dBm et croît linéairement jusqu'à 1 pour un bruit de - 60 dBm et au-delà.

Par exemple, le score de sévérité de l'anomalie de type « changement de canal » pour un nœud vaut 0 pour un nombre de changement de canal inférieur ou égal à 2 et croît linéairement jusqu'à 1 pour un nombre de changement de canal supérieur ou égal à 5 pendant une période de temps égale à 30 minutes.

Par exemple, le score de sévérité de l'anomalie de type « changement de nœud » pour une station vaut 0 pour un nombre de changement de nœud inférieur ou égal à 2 et croît linéairement jusqu'à 1 pour un nombre de changement de nœud supérieur ou égal à 5 pendant une période de temps égale à 30 minutes.

Dans les exemples ci-dessus, les scores de sévérité respectifs sont obtenus par une croissance ou interpolation linéaire présentant l'avantage de la simplicité des calculs pour un volume des données important, les comparaisons de scores de sévérités sont ainsi facilitées.

Dans d'autres exemples, les scores de sévérité respectifs sont obtenus conformément à d'autres méthodes ou modes de calcul. Par exemple, le score de sévérité de l'anomalie de type « couverture Wi-Fi » est obtenu selon une table de type « lookup table » dans laquelle pour certaines valeurs de RSSI ou certaines plages de valeurs de RSSI, un score est assigné.

Cette table peut être obtenue par exemple en définissant des plages de RSSI de 3 dBm, représentatif d'un niveau de signal perçu divisé par 2 : le score 0 est assigné à la plage [-60 dBm ; -63 dBm[, le score 0,25 est assigné à la plage [-63 dBm ; -66 dBm[, le score 0.5 est assigné à la plage [-66 dBm ; - 69 dBm[, le score 0,75 est assigné à la plage [-69 dBm ; -72 dBm[, le score 0,99 est assigné à la plage [-72 dBm ; -80 dBm]. Sur cette dernière plage, le score de sévérité de 0,99 pour une couverture Wi-Fi dont le RSSI est compris dans cette plage est indicateur que le niveau de réception est trop bruité pour que les transmissions à destination ou à réception de la station soient effectives.

Des scores de sévérité sont calculés pour chaque élément du réseau local.

Le module de détection d'anomalies et de calcul de scores de sévérité 12 calcule ainsi, pour chaque groupe de données, un score de sévérité pour chaque type d'anomalies.

Le module de détection d'anomalies et de calcul de scores de sévérité 12 calcule aussi des scores de sévérité pour un ou plusieurs éléments du réseau local en ne considérant que les données relatives à l'élément du réseau local.

Le module de détection d'anomalies et de calcul de scores de sévérité 12 calcule, pour chaque groupe de données, un score de sévérité total à partir des scores de sévérité calculés pour le groupe de données.

Pour cela, des lois de composition des scores sont définies :

Une première loi d'addition : $s_1 \oplus s_2 = f_+(S_1 + S_2)$

Avec $S_1 = f_-(s_1)$, $S_2 = f_-(s_2)$, $f_+(x) = \frac{x}{1+x}$, $f_-(x) = \frac{x}{1-x}$ et $\oplus$ est l'opérateur somme directe. où $s_1$ est par exemple le score de sévérité pour l'anomalie de type « couverture Wi-Fi » et $s_2$ est par exemple le score de sévérité pour l'anomalie de type « volume d'octets ».

Une seconde loi de multiplication $m * s = f_+(mS)$, avec $S = f_-(s)$ et $m \in [0, \infty[$.

Le score de sévérité total $s'_i$ est donné par

$\oplus_{i=1}^{n} s_i$, où n est le nombre d'anomalies $s_i$ est le score de sévérité pour l'anomalie de type indexée par l'indice i.

L'ensemble [0 ; 1[ et les lois ($\oplus$,*) possèdent la plupart des propriétés d'une structure de corps, à l'exception du fait que la loi $\oplus$ n'est pas inversible. Les fonctions $f_-$ et $f_+$ réalisent alors des homéomorphismes respectivement vers et depuis (R, +, x) garantissant les propriétés suivantes :

$$0*s=0$$

$$1*s=1$$

$$m*1=1$$

$$f_-(m*s)=\text{m x } f_-(s)$$

$$s \oplus s = 2 * s$$

$$m_1*(m_2*s)=(m_1*m_2)*s$$

$$m*(s_1 \oplus s_2) = (m*s_1) \oplus (m*s_2)$$

$$s_1 \oplus s_2 = s_2 \oplus s_1$$

$$s_1 \oplus (s_2 \oplus s_3) = (s_2 \oplus s_1) \oplus s_3$$

Ce score de sévérité totale est aussi entre 0 et 1, augmente avec les autres scores de sévérité, et est égal à un dès lors qu'un des scores de sévérité est égal à un.

Le module de détection d'anomalies et de calcul de scores de sévérité 12 calcule aussi des scores de sévérité totale pour un ou plusieurs éléments du réseau local en ne considérant que les données relatives à l'élément du réseau local.

Chaque score de sévérité et de sévérité totale est mémorisé dans une base de données 13.

Le dispositif de détection d'incidents 10 comporte un module d'évaluation du fonctionnement des éléments du réseau local 15.

Le module d'évaluation du fonctionnement des éléments du réseau local 15 calcule au moins un indicateur de la santé du réseau local et/ou calcule un score de santé respectivement sur un ou plusieurs éléments sur une journée. Un élément est par exemple et non limitativement un nœud, un lien, etc....

Le but de l'indicateur de santé est de construire un score borné pour pouvoir comparer différents réseaux locaux et/ou différents éléments ou différentes plages temporelles sans considérations d'échelle : la santé d'un grand réseau n'a pas à être pénalisée par sa taille, il est normal d'y trouver plus d'anomalies que dans un petit réseau.

Le module d'évaluation du fonctionnement des éléments du réseau local 15 utilise avantageusement le score de sévérité total d'un groupe pour calculer un indicateur représentatif de la santé d'un élément en prenant le complémentaire à 1 du score d'anomalies total. Pour un ensemble de groupes, le module d'évaluation du fonctionnement des éléments du réseau local 15 calcule la moyenne des scores de santé pondérés par la durée des groupes. Un score de santé peut être attribué à tout ensemble de groupes de données : un réseau local sur une journée.

Ce score de santé est borné entre 0 et 1, et peut donc être transformé vers n'importe quelle échelle d'indicateur de santé (ex. pourcentage, indice entre 1 et 5, etc.).

Le score de santé est calculé selon la formule suivante :

$$H = 1 - \frac{\sum_{liens} t_i \times s'_i}{\sum_{liens} t_i}$$

où $t_i$ est la durée de connexion du groupe $i$, $s'_i$ le score de sévérité totale du groupe de données.

Le module d'évaluation du fonctionnement des éléments du réseau local 15 calcule aussi des scores de santé pour un ou plusieurs éléments du réseau local en ne considérant que les score de sévérité totale relatifs à l'élément du réseau local.

Le score de santé permet de représenter/synthétiser visuellement le niveau de santé d'un réseau local et de pouvoir le comparer à d'autres réseaux locaux. Il est par exemple utilisé par l'opérateur qui est en charge d'analyser les performances et le niveau de santé des réseaux locaux à l'échelle d'un parc d'abonnés.

Les scores de santé calculés pour des éléments du réseau local permettent de représenter/synthétiser visuellement le niveau de santé d'un élément du réseau local et de pouvoir le comparer à d'autres éléments du réseau local et/ou à des éléments d'autres réseaux locaux.

Les données calculées par le module d'évaluation du fonctionnement des éléments du réseau local 15 sont mémorisées dans la base de données 13.

Le dispositif de détection d'incidents 10 comporte un module de détection d'incidents et de calcul de scores de criticité 16.

Le module de détection d'incidents et de calcul de scores de criticité 16 effectue une analyse journalière afin de détecter des incidents du réseau local et de proposer des recommandations adaptées.

Un incident, contrairement aux anomalies, se produit à l'échelle de la journée. En fonction du type d'incident, il peut concerner une station, par exemple lié à une utilisation par la station d'un standard vétuste, un lien Wi-Fi, par exemple une mauvaise transmission de paquets, ou un point d'accès, par exemple un niveau élevé de bruit.

Chaque type d'incident est lié à un type d'anomalie. Pour déterminer s'il y a un incident, le module de détection d'incidents et de calcul de scores de criticité 16 calcule sur l'ensemble des groupes concernés la durée de connexion pondérée par la sévérité totale associée. Ce score de criticité, qui s'exprime en secondes, est appelé score de criticité totale :

$$c = \sum_{groupes} t_i \ x \ s'_i$$

où $t_i$ est la durée de connexion du groupe $i$, $s'_i$ est le score de sévérité totale de l'anomalie et la sommation est effectuée sur tous les groupes de données affectés par l'incident.

Un incident permet ainsi de voir si la criticité liée à une anomalie est problématique sur une journée : celle-ci s'étale dans le temps, avec une sévérité non nulle. On considère qu'il y a effectivement un incident si le score de criticité calculé dépasse une durée de référence, par exemple 600 secondes, soit 10 minutes d'anomalie avec sévérité maximale.

La criticité totale est la métrique privilégiée pour mesurer l'impact d'un incident sur le réseau local. Les incidents les plus graves sont ceux qui impactent le plus de liens du réseau local, le plus longtemps, le plus sévèrement. Il est parfois intéressant de considérer le temps d'incidence à la place, c'est-à-dire la durée cumulée de tous les groupes affectés par l'incident. Par construction, la criticité totale 402 est inférieure ou égale au temps d'incidence 401, elle-même inférieure au temps total de connexion sur la journée 400, comme illustré dans la Fig. 4.

Par exemple, si le score de criticité totale est supérieur à 40% de la durée totale des connexions, des actions correctives peuvent être effectuées selon le type d'incident.

Si l'utilisateur a été impacté plus de 4 heures sur un total de 10 heures de connexions, l'incident est, par exemple considéré comme relativement grave et des actions correctives peuvent être effectuées.

Le module de détection d'incidents et de calcul de scores de criticité 16 calcule aussi des scores de criticité totale pour un ou plusieurs éléments du réseau local en ne considérant que les score de sévérité totale relatifs à l'élément du réseau local.

Le dispositif de détection d'incidents 10 comporte un module de génération d'actions correctives 14.

Le module de génération d'actions correctives 14 génère des recommandations ou des actions correctives pour améliorer le fonctionnement d'un ou plusieurs réseaux locaux. Les recommandations sont par exemple transférées au fournisseur d'accès internet du réseau local et/ou aux utilisateurs du réseau local.

Par exemple, le module de génération d'actions correctives 14 identifie le ou les réseaux locaux pour lequel ou lesquels le score de criticité totale est supérieur ou égal à un seuil prédéterminé par exemple égal à 0.4.

Les actions correctives peuvent être générées en analysant le score de santé et/ou le score de criticité totale du réseau local et/ou en analysant le score de santé et/ou le score de criticité totale d'un ou plusieurs éléments du réseau local.

Les actions correctives représentent des actions qui peuvent être automatisées sur les équipements concernés. Ainsi, le dispositif de détection d'incidents 10 identifie, à partir des scores de criticité totale, par exemple à la fin d'une journée les équipements nécessitant des optimisations et/ou changements de configuration.

Le module de génération d'actions correctives 14 ayant identifié le ou les réseaux dont le score de criticité totale et/ou le score de santé est supérieur ou égal au seuil prédéterminé génère des actions correctives en analysant les scores de sévérités mémorisés dans la journée. La liste des actions correctives est envoyée vers ces équipements en utilisant, par exemple, le protocole HTTP (Hypertext Transfer Protocol) ou MQTT (Message Queuing Telemetry Transport).

Si un incident de type couverture est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « faible niveau de puissance en réception d'un signal » (RSSI < -77 dBm), le module de génération d'actions correctives 14 transfère au fournisseur d'accès internet du réseau local et/ou aux utilisateurs du réseau local un message suggérant l'ajout d'un nouveau nœud (ou point d'accès) au niveau du réseau local afin d'améliorer la couverture globale du réseau local.

Par exemple, si un problème de mauvais positionnement d'un nœud est détecté, par exemple en analysant les scores de sévérité relatifs au changement de nœud ou de canal, le module de génération d'actions correctives 14 transfère au fournisseur d'accès internet du réseau local et/ou aux utilisateurs du réseau local un message invitant à déplacer un nœud, par exemple un nœud répéteur d'une passerelle internet du réseau local.

Si un incident de type changement fréquent de canal au niveau d'un nœud est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « changements fréquents de canal », le module de génération d'actions correctives 14 transfère au fournisseur d'accès internet du réseau local et/ou aux utilisateurs du réseau local un message suggérant aux utilisateurs et/ou aux nœuds de fixer le canal à utiliser et/ou de modifier les seuils des algorithmes locaux qui engendrent les changements de canaux.

Par exemple, si un problème de bruit est détecté, par exemple en analysant les scores de sévérité relatifs au niveau du bruit, le module de génération d'actions correctives 14 transfère au fournisseur d'accès internet du réseau local et/ou aux utilisateurs du réseau local un message invitant à déplacer voire supprimer des sources de bruit et/ou, en action corrective, un message notifiant un nœud de changer de bande de fréquence.

Si un incident de type bruit est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « niveau de bruit très élevé autour d'un nœud ou stations », le module de génération d'actions correctives 14 transfère au fournisseur d'accès internet du réseau local et/ou aux utilisateurs du réseau local un message suggérant aux utilisateurs et/ou aux nœuds de basculer vers un autre canal et/ou bande wifi où le niveau de bruit est moins élevé.

Par exemple, si un incident de type configuration wifi non standard est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relative aux anomalies de type « standards vétustes utilisés », le module de génération d'actions correctives 14 transfère au fournisseur d'accès internet du réseau local et/ou aux utilisateurs du réseau local un message suggérant aux utilisateurs et/ou aux nœuds de restaurer la configuration wifi par défaut.

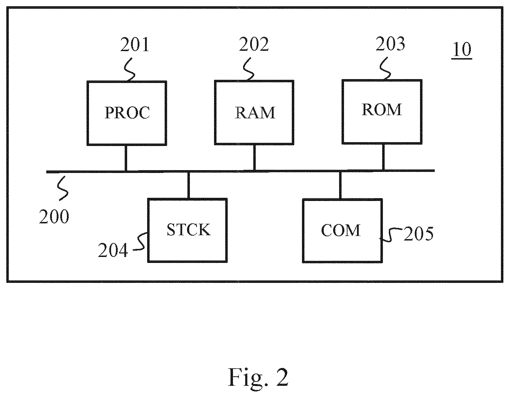

La **Fig. 2** illustre schématiquement un exemple d'architecture matérielle d'un dispositif de détection d'incidents dans au moins un réseau local.

Selon l'exemple d'architecture matérielle représenté à la Fig. 2, le dispositif de détection d'incidents 10 comprend, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 505 permettant au dispositif de détection d'incidents 10 de communiquer par l'intermédiaire du réseau étendu 20.

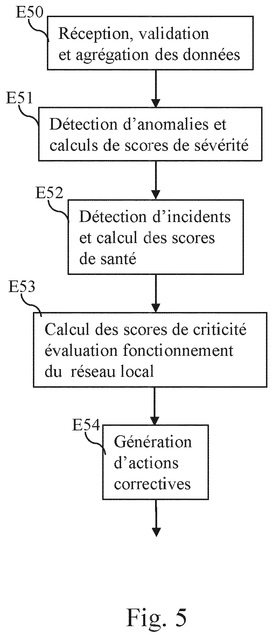

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif de détection d'incident 10 est mis sous tension, le processeur 201 est capable de lire de la RAM 202 des instructions et de les exécuter. Ces instructions forment un programme d'ordinateur causant la mise en œuvre, par le processeur 201, de tout ou partie du procédé décrit en relation avec la Fig. 5.

Le procédé décrit ci-après en relation avec la Fig. 5 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de détection d'incidents 10 comprend de la circuiterie électronique configurée pour mettre en œuvre le procédé décrit en relation avec la Fig. 4.

Il est à remarquer ici que la Fig. 2 représente une architecture matérielle d'un unique dispositif de détection d'incidents 10. Les différents éléments constitutifs du dispositif de détection d'incidents 10 peuvent être répartis dans différents dispositifs informatiques compris dans le nuage informatique.

La **Fig. 5** illustre schématiquement un procédé de détection d'incidents selon la présente invention.

A l'étape E50, le dispositif de détection d'incidents 10 reçoit, valide et agrège chaque message reçu d'un agent de collecte 41.

Le dispositif de détection d'incidents 10 valide le contenu de chaque message reçu par exemple en vérifiant si le format du message reçu est conforme, si les valeurs des informations comprises dans le message reçu sont dans une plage de valeur cohérente et si le réseau local dont est issu le message fait partie de l'ensemble des réseaux locaux géré par le dispositif de détection d'incidents 10.

Dans l'affirmative, le dispositif de détection d'incidents 10 agrège en groupes de données les données descriptives des connexions entre les stations et les nœuds et les données descriptives des connexions entre les nœuds.

Par exemple, les données sont partitionnées selon une périodicité prédéterminée, par exemple égale à 10mn.

Si, dans une partition, aucun changement de caractéristique de fonctionnement d'un lien n'apparaît, un groupe de données est formé, le groupe de données comprenant l'ensemble des données de la partition.

Dans chaque partition, à chaque changement d'au moins une caractéristique de fonctionnement d'un lien, un groupe de données est formé, qui comprend les données de la partition correspondant à la bande de fréquence, au canal et au protocole de communication. Une caractéristique de fonctionnement d'un lien est par exemple et non limitativement, la bande de fréquence, le canal et le protocole de communication tel que par exemple le protocole Wi-Fi

A l'étape E51, le dispositif de détection d'incidents 10 détecte pour chaque groupe, des anomalies en calculant le score borné entre 0 et 1 appelé sévérité pour les différentes métriques.

Le score de sévérité permet d'évaluer l'écart de ces métriques à des valeurs prédéterminées représentatives d'un fonctionnement ou comportement normal.

Un score de sévérité de 0 signifie qu'il n'y a pas d'anomalie, un score de sévérité de 1 signifie une perturbation importante sur le lien Wi-Fi pour le groupe.

Le dispositif de détection d'incidents 10 calcule ainsi, pour chaque groupe de données, un score de sévérité pour chaque type d'anomalies.

Le dispositif de détection d'incidents 10 calcule aussi des scores de sévérité pour un ou plusieurs éléments du réseau local en ne considérant que les données relatives à l'élément du réseau local.

Le dispositif de détection d'incidents 10 calcule, pour chaque groupe de données, un score de sévérité total à partir des scores de sévérité calculés pour le groupe de données.

Ce score de sévérité totale est aussi entre 0 et 1, augmente avec les autres scores de sévérité, et est égal à un dès lors qu'un des scores de sévérité est égal à un.

Le dispositif de détection d'incidents 10 calcule aussi des scores de sévérité totale pour un ou plusieurs éléments du réseau local en ne considérant que les données relatives à l'élément du réseau local.

Chaque score de sévérité et de sévérité totale est mémorisé dans une base de données 13.

A l'étape E52, le dispositif de détection d'incidents 10 calcule au moins un indicateur de la santé du réseau local et/ou calcule un score de santé respectivement sur un ou plusieurs éléments sur une journée. Un élément est par exemple et non limitativement un nœud, un lien, etc....

Le but de l'indicateur de santé est de construire un score borné pour pouvoir comparer différents réseaux locaux et/ou différents éléments ou différentes plages temporelles sans considérations d'échelle : la santé d'un grand réseau n'a pas à être pénalisée par sa taille, il est normal d'y trouver plus d'anomalies que dans un petit réseau.

Le dispositif de détection d'incidents 10 utilise avantageusement le score de sévérité totale d'un groupe pour calculer un indicateur représentatif de la santé d'un élément en prenant le complémentaire à 1 du score de sévérité totale. Pour un ensemble de groupes, le dispositif de détection d'incidents 10 calcule la moyenne des scores de santé pondérés par la durée des groupes.

Un score de santé peut être attribué à tout ensemble de groupes de données : un réseau local sur une journée.

Ce score de santé est borné entre 0 et 1, et peut donc être transformé vers n'importe quelle échelle d'indicateur de santé (ex. pourcentage, indice entre 1 et 5, etc.).

Le score de santé est calculé selon la formule suivante :

$$H = 1 - \frac{\sum_{liens} t_i \times s'_i}{\sum_{liens} t_i}$$

où $t_i$ est la durée de connexion du groupe $i$, $s'_i$ le score de sévérité totale du groupe de données.

Le dispositif de détection d'incidents 10 calcule aussi des scores de santé pour un ou plusieurs éléments du réseau local en ne considérant que les scores de sévérité totale relatifs à l'élément du réseau local.

Le score de santé permet de représenter/synthétiser visuellement le niveau de santé d'un réseau local et de pouvoir le comparer à d'autres réseaux locaux. Il est par exemple utilisé par l'opérateur qui est en charge d'analyser les performances et le niveau de santé des réseaux locaux à l'échelle d'un parc d'abonnés.

Les scores de santé calculés pour des éléments du réseau local permettent de représenter/synthétiser visuellement le niveau de santé d'un élément du réseau local et de pouvoir le comparer à d'autres éléments du réseau local et/ou à des éléments d'autres réseaux locaux.

A l'étape E53, le dispositif de détection d'incidents 10 calcule des scores de criticité.

Le dispositif de détection d'incidents 10 effectue une analyse journalière afin de détecter des incidents du réseau local et de proposer des recommandations adaptées.

Un incident, contrairement aux anomalies, se produit à l'échelle de la journée. En fonction du type d'incident, il peut concerner une station, par exemple lié à une utilisation par la station d'un standard vétuste, un lien Wi-Fi, par exemple une mauvaise transmission de paquets, ou un point d'accès, par exemple un niveau élevé de bruit.

Chaque type d'incident est lié à un type d'anomalie. Pour déterminer s'il y a un incident, le module de détection d'incidents et de calcul de scores de criticité 16 calcule sur l'ensemble des groupes concernés la durée de connexion pondérée par la sévérité totale associée. Ce score de criticité, qui s'exprime en secondes, est appelé score de criticité totale :

$$c = \sum_{groupes} t_i \; x \; s'_i$$

où $t_i$ est la durée de connexion du groupe $i$, $s'_i$ est le score de sévérité totale de l'anomalie et la sommation est effectuée sur tous les groupes de données affectés par l'incident.

Un incident permet ainsi de voir si la criticité liée à une anomalie est problématique sur une journée : celle-ci s'étale dans le temps, avec une sévérité non nulle. On considère qu'il y a effectivement un incident si le score de criticité calculé dépasse une durée de référence, par exemple 600 secondes, soit 10 minutes d'anomalie avec sévérité maximale.

La criticité totale est la métrique privilégiée pour mesurer l'impact d'un incident sur le réseau local. Les incidents les plus graves sont ceux qui impactent le plus de liens du réseau local, le plus longtemps, le plus sévèrement. Il est parfois intéressant de considérer le temps d'incidence à la place, c'est-à-dire la durée cumulée de tous les groupes affectés par l'incident. Par construction, la criticité totale 402 est inférieure ou égale au temps d'incidence 401, elle-même inférieure au temps total de connexion sur la journée 400, comme illustré dans la Fig. 4.

Par exemple, si le score de criticité totale est supérieur à 40% de la durée totale des connexions, des actions correctives peuvent être effectuées selon le type d'incident.

Si l'utilisateur a été impacté plus de 4 heures sur un total de 10 heures de connexions, l'incident est, par exemple considéré comme relativement grave et des actions correctives peuvent être effectuées.

Le module de détection d'incidents et de calcul de scores de criticité 16 calcule aussi des scores de criticité totale pour un ou plusieurs éléments du réseau local en ne considérant que les scores de sévérité totale relatifs à l'élément du réseau local.

A l'étape E54, le dispositif de détection d'incidents 10 génère des recommandations ou des actions correctives pour améliorer le fonctionnement d'un ou plusieurs réseaux locaux. Les recommandations sont par exemple transférées au fournisseur d'accès internet du réseau local et/ou aux utilisateurs du réseau local.

Par exemple, le dispositif de détection d'incidents 10 identifie le ou les réseaux locaux pour lequel ou lesquels le score de criticité totale est supérieur ou égal à un seuil prédéterminé par exemple égal à 0.4.

Les actions correctives peuvent être générées en analysant le score de santé et/ou le score de criticité totale du réseau local et/ou en analysant le score de santé et/ou le score de criticité totale d'un ou plusieurs éléments du réseau local.

Les actions correctives représentent des actions qui peuvent être automatisées sur les équipements concernés. Ainsi, le dispositif de détection d'incidents 10 identifie, à partir des scores de criticité totale, par exemple à la fin d'une journée les équipements nécessitant des optimisations et/ou changements de configuration.

Le dispositif de détection d'incidents 10 ayant identifié le ou les réseaux dont le score de criticité totale et/ou le score de santé est supérieur ou égal au seuil prédéterminé génère des actions correctives en analysant les scores de sévérités mémorisés dans la journée.

La liste des actions correctives est envoyée vers ces équipements en utilisant, par exemple, le protocole HTTP (Hypertext Transfer Protocol) ou MQTT (Message Queuing Telemetry Transport).

Par exemple, si un problème de couverture est détecté, par exemple en analysant les scores de sévérité relatifs au niveau du changement de nœud ou de canal, le dispositif de détection d'incidents 10 transfère au fournisseur d'accès internet du réseau local et/ou aux utilisateurs du réseau local un message invitant à rapprocher une station d'un nœud ou à ajouter un nœud dans le réseau local.

Si un incident de type couverture est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « faible niveau de puissance en réception d'un signal » (RSSI < -77 dBm), le dispositif de détection d'incidents 10 transfère au fournisseur d'accès internet du réseau local et/ou aux utilisateurs du réseau local un message suggérant l'ajout d'un nouveau nœud (ou point d'accès) au niveau du réseau local afin d'améliorer la couverture globale du réseau local.

Par exemple, si un problème de mauvais positionnement d'un nœud est détecté, par exemple en analysant les scores de sévérité relatifs au changement de nœud ou de canal, le dispositif de détection d'incidents 10 transfère au fournisseur d'accès internet du réseau local et/ou aux utilisateurs du réseau local un message invitant à déplacer un nœud, par exemple un nœud répéteur d'une passerelle internet du réseau local.

Si un incident de type changement fréquent de canal au niveau d'un nœud est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « changements fréquents de canal », le dispositif de détection d'incidents 10 transfère au fournisseur d'accès internet du réseau local et/ou aux utilisateurs du réseau local un message suggérant aux utilisateurs et/ou aux nœuds de fixer le canal à utiliser et/ou de modifier les seuils des algorithmes locaux qui engendrent les changements de canaux.

Par exemple, si un problème de bruit est détecté, par exemple en analysant les scores de sévérité relatifs au niveau du bruit, le dispositif de détection d'incidents 10 transfère au fournisseur d'accès internet du réseau local et/ou aux utilisateurs du réseau local un message invitant à déplacer voire supprimer des sources de bruit et/ou, en action corrective, un message notifiant un nœud de changer de bande de fréquence.

Si un incident de type bruit est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « niveau de bruit très élevé autour d'un nœud ou stations », le dispositif de détection d'incidents 10 transfère au fournisseur d'accès internet du réseau local et/ou aux utilisateurs du réseau local un message suggérant aux utilisateurs et/ou aux nœuds de basculer vers un autre canal et/ou bande wifi où le niveau de bruit est moins élevé.

Par exemple, si un incident de type configuration wifi non standard est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « standards vétustes utilisés », le dispositif de détection d'incidents 10 transfère au fournisseur d'accès internet du réseau local et/ou aux utilisateurs du réseau local un message suggérant aux utilisateurs et/ou aux nœuds de restaurer la configuration wifi par défaut.

## Revendications

1. Procédé de détection d'incidents dans un réseau local par un dispositif de détection d'incidents, le dispositif de détection d'incidents étant relié au réseau local par l'intermédiaire d'un réseau étendu, le réseau local comportant un agent de collecte de données collectant des données descriptives des connexions entre des stations et des nœuds du réseau local et des données descriptives des connexions entre les nœuds, le dispositif de détection d'incidents étant apte à détecter différents types d'anomalies et le procédé comporte les étapes effectuées par le dispositif de détection d'incidents de :

   - réception (E50) de messages de l'agent de collecte, validation et agrégation des données descriptives des connexions entre les stations et les nœuds et les données descriptives des connexions entre les nœuds comprises dans chaque message reçu en groupes de données, les données étant agrégées en partitionnant les données selon une périodicité prédéterminée et :

      - calcul (E51) pour chaque groupe de données et pour chaque type d'anomalies, d'un score de sévérité à partir de valeurs prédéterminées représentatives d'un fonctionnement ou d'un comportement normal, et calcul d'un score de sévérité totale pour chaque groupe de données à partir des scores de sévérité calculés pour le groupe de données,
      - calcul (E53) sur l'ensemble des scores de sévérité totale des groupes de données agrégés pendant une durée prédéterminée d'un score de criticité totale, la durée prédéterminée étant telle qu'une pluralité de groupes de données sont agrégés pendant la durée prédéterminée, le score de criticité totale est calculé à partir de la somme des scores de sévérités totales pondérés par la durée des groupes des données,
- génération (E54) de messages de recommandations ou d'actions correctives au moins en analysant le score de criticité totale,

**caractérisé en ce que** :

si, dans une partition, aucun changement de caractéristique de fonctionnement d'un lien n'apparaît, un groupe de données est formé, le groupe de données comprenant l'ensemble des données de la partition et,
à chaque changement d'au moins une caractéristique de fonctionnement d'un lien dans la partition, la caractéristique de fonctionnement du lien étant la bande de fréquence du lien, le protocole de communication du lien et le canal du lien, un groupe de données est formé qui comprend les données de la partition correspondant à la bande de fréquence du lien, au protocole de communication du lien et au canal du lien.

2. Procédé selon la revendication 1, **caractérisé en ce que** le procédé comporte en outre une étape (E52) de calcul de la moyenne des scores de sévérités totales pondérés par la durée des groupes des données pour obtenir un score de santé du réseau local.

3. Procédé selon la revendication 2, **caractérisé en ce que** les recommandations ou actions correctives sont en outre générées à partir du score de santé totale calculé selon la formule suivante :

$$H = 1 - \frac{\sum_{liens} t_i \times s'_i}{\sum_{liens} t_i}$$

où $t_i$ est la durée de connexion du groupe $i$, $s'_i$ le score de sévérité totale du groupe de données.

4. Procédé selon l'une quelconque des revendications 1 à 3, **caractérisé en ce que** le réseau local est composé d'éléments et **en ce que** des scores de sévérités, des scores de sévérité totale, des scores de criticité totale et des scores de santé sont calculés pour au moins une partie des éléments du réseau local, un élément du réseau local étant un nœud ou un lien.

5. Procédé selon la revendication 4, **caractérisé en ce que** les recommandations ou actions correctives sont en outre générées à partir des scores de sévérité calculés pour la au moins une partie du réseau local.

6. Procédé selon l'une quelconque des revendications 1 à 5, **caractérisé en ce que** la valeur du score de sévérité est bornée par la valeur 0 et la valeur 1.

7. Procédé selon l'une quelconque des revendications 1 à 6, **caractérisé en ce que** chaque score de sévérité totale est borné par la valeur 0 et la valeur 1 et est égale à la valeur 1 dès qu'un score de sévérité est égal à 1.

8. Procédé selon l'une quelconque des revendications 1 à 7, **caractérisé en ce que** les recommandations sont des invitations à rapprocher une station d'un nœud du réseau local ou à ajouter un nœud dans le réseau local ou à déplacer un nœud du réseau local ou à modifier un canal à utiliser ou à modifier des seuils d'algorithmes locaux qui engendrent les changements de canaux ou à supprimer des sources de bruit ou à restaurer une configuration du protocole de communication et les actions correctives sont des modification de canaux ou des modifications de seuils d'algorithmes locaux qui engendrent les changements de canaux.

9. Dispositif de détection d'incidents dans un réseau local, le dispositif de détection d'incidents étant relié au réseau local par l'intermédiaire d'un réseau étendu, le réseau local comportant un agent de collecte de données collectant des données descriptives des connexions entre des stations et des nœuds du réseau local et des données descriptives des connexions entre les nœuds, le dispositif de détection d'incidents étant apte à détecter différents types d'anomalies et le dispositif de détection d'incidents comporte :

- des moyens de réception de messages de l'agent de collecte, validation et agrégation des données descriptives des connexions entre les stations et les nœuds et les données descriptives des connexions entre les nœuds comprises dans chaque message reçu en groupes de données, les données étant agrégées en partitionnant les données selon une périodicité prédéterminée et :

- des moyens de calcul pour chaque groupe de données, pour chaque type d'anomalie d'un score de sévérité à partir de valeurs prédéterminées représentatives d'un fonctionnement ou d'un comportement normal, et calcul d'un score de sévérité totale pour chaque groupe de données à partir des scores de sévérité calculés pour le groupe de données,
- des moyens de calcul sur l'ensemble des scores de sévérité totale des groupes de données agrégés pendant une durée prédéterminée d'un score de criticité totale, la durée prédéterminée étant telle qu'une pluralité de groupes de données sont agrégés pendant la durée prédéterminée, le score de criticité totale est calculé à partir de la somme des scores de sévérités totales pondérés par la durée des groupes des données,
- des moyens de génération de messages de recommandations ou d'actions correctives au moins en analysant score de criticité totale,

**caractérisé en ce que** :

si, dans une partition, aucun changement de caractéristique de fonctionnement d'un lien n'apparaît, un groupe de données est formé, le groupe de données comprenant l'ensemble des données de la partition et,
à chaque changement d'au moins une caractéristique de fonctionnement d'un lien dans la partition, la caractéristique de fonctionnement du lien étant la bande de fréquence du lien, le protocole de communication du lien et le canal du lien, un groupe de données est formé qui comprend les données de la partition correspondant à la bande de fréquence du lien, au protocole de communication du lien et au canal du lien.

10. Un produit programme d'ordinateur **caractérisé en ce qu'**il comprend des instructions pour implémenter, par un dispositif nœud, le procédé selon l'une quelconque des revendications 1 à 8, lorsque ledit programme est exécuté par un processeur du dispositif nœud.

11. Un support de stockage **caractérisé en ce qu'**il stocke un programme d'ordinateur comprenant des instructions pour implémenter, par un dispositif nœud, le procédé selon l'une quelconque des revendications 1 à 8, lorsque ledit programme est exécuté par un processeur du dispositif nœud.

**Patentansprüche**

1. Verfahren zur Erkennung von Störfällen in einem lokalen Netzwerk durch eine Störfallerkennungsvorrichtung, wobei die Störfallerkennungsvorrichtung mit dem lokalen Netzwerk über ein Weitverkehrsnetzwerk verbunden ist, wobei das lokale Netzwerk einen Datensammelagenten umfasst, der deskriptive Daten der Verbindungen zwischen Stationen und Knoten des lokalen Netzwerks und deskriptive Daten der Verbindungen zwischen den Knoten sammelt, wobei die Störfallerkennungsvorrichtung in der Lage ist, verschiedene Arten von Anomalien zu erkennen, und das Verfahren die folgenden von der Störfallerkennungsvorrichtung durchgeführten Schritte umfasst:

- Empfangen (E50) von Nachrichten des Sammelagenten, Validieren und Aggregieren der deskriptiven Daten der Verbindungen zwischen den Stationen und den Knoten und der deskriptiven Daten der Verbindungen zwischen den Knoten, die in jeder empfangenen Nachricht enthalten sind, zu Datengruppen, wobei die Daten aggregiert werden, indem die Daten gemäß einer vorbestimmten Periodizität partitioniert werden, und:

- Berechnen (E51), für jede Datengruppe und für jede Art von Anomalie, eines Schweregrad-Scores ausgehend von vorbestimmten Werten, die für einen normalen Betrieb oder für ein normales Verhalten repräsentativ sind, und Berechnen eines Gesamtschweregrad-Scores für jede Datengruppe ausgehend von den für die Datengruppe berechneten Schweregrad-Scores,
- Berechnen (E53), über alle Gesamtschweregrad-Scores der während einer vorbestimmten Dauer aggregierten Datengruppen, eines Gesamtkritikalität-Scores, wobei die vorbestimmte Dauer derart ist, dass eine Mehrzahl von Datengruppen während der vorbestimmten Dauer aggregiert werden, wobei der Gesamtkritikalität-Score ausgehend von der Summe der durch die Dauer der Datengruppen gewichteten Gesamtschweregrad-Scores berechnet wird,
- Erzeugen (E54) von Nachrichten mit Empfehlungen oder Korrekturmaßnahmen mindestens durch Analysieren des Gesamtkritikalität-Scores,

**dadurch gekennzeichnet, dass**:

wenn in einer Partition keine Änderung eines Betriebsmerkmals eines Links auftritt, eine Datengruppe gebildet wird, wobei die Datengruppe alle Daten der Partition umfasst, und
bei jeder Änderung mindestens eines Betriebsmerkmals eines Links in der Partition, wobei das Betriebsmerkmal des Links das Frequenzband des Links, das Kommunikationsprotokoll des Links und der Kanal des Links ist, eine Datengruppe gebildet wird, die die Daten der Partition umfasst, die dem Frequenzband des Links, dem Kommunikationsprotokoll des Links und dem Kanal des Links entsprechen.

2. Verfahren nach Anspruch 1, **dadurch gekenn-**

**zeichnet, dass** das Verfahren ferner einen Schritt (E52) des Berechnens des Mittelwerts der durch die Dauer der Datengruppen gewichteten Gesamtschweregrad-Scores umfasst, um einen Gesundheit-Score des lokalen Netzwerks zu erhalten.

3. Verfahren nach Anspruch 2, **dadurch gekennzeichnet, dass** die Empfehlungen oder Korrekturmaßnahmen ferner ausgehend von dem Gesamtgesundheit-Score erzeugt werden, der nach der folgenden Formel berechnet wird:

$$H = 1 - \frac{\sum_{\text{Links}} t_i \ \text{x} \ s'_i}{\sum_{\text{Links}} t_i}$$

wobei $t_i$ die Verbindungsdauer der Gruppe i ist, $s'_i$ der Gesamtschweregrad-Score der Datengruppe ist.

4. Verfahren nach einem der Ansprüche 1 bis 3, **dadurch gekennzeichnet, dass** das lokale Netzwerk aus Elementen zusammengesetzt ist und dass Schweregrad-Scores, Gesamtschweregrad-Scores, Gesamtkritikalität-Scores und Gesundheit-Scores für mindestens einen Teil der Elemente des lokalen Netzwerks berechnet werden, wobei ein Element des lokalen Netzwerks ein Knoten oder ein Link ist.

5. Verfahren nach Anspruch 4, **dadurch gekennzeichnet, dass** die Empfehlungen oder Korrekturmaßnahmen ferner ausgehend von den für den mindestens einen Teil des lokalen Netzwerks berechneten Schweregrad-Scores erzeugt werden.

6. Verfahren nach einem der Ansprüche 1 bis 5, **dadurch gekennzeichnet, dass** der Wert des Schweregrad-Scores durch den Wert 0 und den Wert 1 begrenzt wird.

7. Verfahren nach einem der Ansprüche 1 bis 6, **dadurch gekennzeichnet, dass** jeder Gesamtschweregrad-Score durch den Wert 0 und den Wert 1 begrenzt wird und gleich dem Wert 1 ist, sobald ein Schweregrad-Score gleich 1 ist.

8. Verfahren nach einem der Ansprüche 1 bis 7, **dadurch gekennzeichnet, dass** die Empfehlungen Aufforderungen sind, eine Station näher an einen Knoten des lokalen Netzwerks heranzuführen, einen Knoten in dem lokalen Netzwerk hinzuzufügen oder einen Knoten des lokalen Netzwerks zu verlegen oder einen zu verwendenden Kanal zu ändern oder Schwellenwerte lokaler Algorithmen zu ändern, die Kanaländerungen bewirken, oder Rauschquellen zu unterdrücken oder eine Konfiguration des Kommunikationsprotokolls wiederherzustellen, und die Korrekturmaßnahmen Kanaländerungen oder Änderungen von Schwellenwerten lokaler Algorithmen sind, die Kanaländerungen bewirken.

9. Vorrichtung zur Erkennung von Störfällen in einem lokalen Netzwerk, wobei die Störfallerkennungsvorrichtung mit dem lokalen Netzwerk über ein Weitverkehrsnetzwerk verbunden ist, wobei das lokale Netzwerk einen Datensammelagenten umfasst, der deskriptive Daten der Verbindungen zwischen Stationen und Knoten des lokalen Netzwerks und deskriptive Daten der Verbindungen zwischen den Knoten sammelt, wobei die Störfallerkennungsvorrichtung in der Lage ist, verschiedene Arten von Anomalien zu erkennen, und wobei die Störfallerkennungsvorrichtung umfasst:

- Mittel zum Empfangen von Nachrichten des Sammelagenten, Validieren und Aggregieren der deskriptiven Daten der Verbindungen zwischen den Stationen und den Knoten und der deskriptiven Daten der Verbindungen zwischen den Knoten, die in jeder empfangenen Nachricht enthalten sind, zu Datengruppen, wobei die Daten aggregiert werden, indem die Daten gemäß einer vorbestimmten Periodizität partitioniert werden, und:

- Mittel zum Berechnen, für jede Datengruppe, für jede Art von Anomalie, eines Schweregrad-Scores ausgehend von vorbestimmten Werten, die für einen normalen Betrieb oder für ein normales Verhalten repräsentativ sind, und Berechnen eines Gesamtschweregrad-Scores für jede Datengruppe ausgehend von den für die Datengruppe berechneten Schweregrad-Scores,
- Mittel zum Berechnen, über alle Gesamtschweregrad-Scores der während einer vorbestimmten Dauer aggregierten Datengruppen, eines Gesamtkritikalität-Scores, wobei die vorbestimmte Dauer derart ist, dass eine Mehrzahl von Datengruppen während der vorbestimmten Dauer aggregiert werden, wobei der Gesamtkritikalität-Score ausgehend von der Summe der durch die Dauer der Datengruppen gewichteten Gesamtschweregrad-Scores berechnet wird,
- Mittel zum Erzeugen von Nachrichten mit Empfehlungen oder Korrekturmaßnahmen mindestens durch Analysieren des Gesamtkritikalität-Scores,

**dadurch gekennzeichnet, dass**:

wenn in einer Partition keine Änderung eines Betriebsmerkmals eines Links auftritt, eine Datengruppe gebildet wird, wobei die Datengruppe alle Daten der Partition umfasst, und bei jeder Änderung mindestens eines Betriebsmerkmals eines Links in der Partition, wobei das Betriebsmerkmal des Links das Frequenzband des Links, das Kommunikationsprotokoll des Links und der Kanal des Links ist, eine Datengruppe gebildet wird, die die Daten der Partition umfasst, die dem Frequenzband des Links, dem Kommunikationsprotokoll des Links und dem Kanal des Links entsprechen.

10. Computerprogrammprodukt, **dadurch gekennzeichnet, dass** es Anweisungen umfasst, um, durch eine Knotenvorrichtung, das Verfahren nach einem der Ansprüche 1 bis 8 zu implementieren, wenn das Programm durch einen Prozessor der Knotenvorrichtung ausgeführt wird.

11. Speichermedium, **dadurch gekennzeichnet, dass** es ein Computerprogramm speichert, das Anweisungen umfasst, um, durch eine Knotenvorrichtung, das Verfahren nach einem der Ansprüche 1 bis 8 zu implementieren, wenn das Programm durch einen Prozessor der Knotenvorrichtung ausgeführt wird.

**Claims**

1. Method for detecting incidents in a local area network by way of an incident detection device, the incident detection device being connected to the local area network via a wide area network, the local area network comprising a data collection agent collecting data describing the connections between stations and nodes of the local area network and data describing the connections between the nodes, the incident detection device being able to detect various types of anomaly and the method comprising the following steps, performed by the incident detection device:

   - receiving (E50) messages from the collection agent, validating and aggregating the data describing the connections between the stations and the nodes and the data describing the connections between the nodes and contained in each received message into groups of data, the data being aggregated by partitioning the data with a predetermined periodicity, and:

      - calculating (E51), for each group of data and for each type of anomaly, a severity score on the basis of predetermined values representative of normal operation or behaviour, and calculating a total severity score for each group of data on the basis of the severity scores calculated for the group of data,

   - calculating (E53) a total criticality score from all of the total severity scores for the aggregated groups of data during a predetermined duration, the predetermined duration being such that a plurality of groups of data are aggregated during the predetermined duration, the total criticality score being calculated on the basis of the sum of the total severity scores weighted by the duration of the groups of data,
   - generating (E54) recommendation messages or corrective actions at least by analysing the total criticality score,

   **characterized in that**:

      if, within a partition, no change of operating feature of a link occurs, a group of data is formed, the group of data comprising all of the data of the partition and, upon each change of at least one operating feature of a link within the partition, the operating feature of the link being the frequency band of the link, the communication protocol of the link and the channel of the link, a group of data is formed, which comprises the data of the partition corresponding to the frequency band of the link, to the communication protocol of the link and to the channel of the link.

2. Method according to Claim 1, **characterized in that** the method furthermore comprises a step (E52) of calculating the average of the total severity scores weighted by the duration of the groups of data so as to obtain a health score for the local area network.

3. Method according to Claim 2, **characterized in that** the recommendations or corrective actions are furthermore generated on the basis of the total health score calculated according to the following formula:

$$H = 1 - \frac{\sum_{\text{links}} t_i \, x \, s'_i}{\sum_{\text{links}} t_i}$$

   where $t_i$ is the connection duration of the group i, $s'_i$ is the total severity score for the group of data.

4. Method according to any one of Claims 1 to 3, **characterized in that** the local area network consists of elements and **in that** severity scores, total severity scores, total criticality scores and health scores are calculated for at least some of the elements of the local area network, an element of the local area network being a node or a link.

5. Method according to Claim 4, **characterized in that** the recommendations or corrective actions are also generated on the basis of the severity scores calculated for the at least one portion of the local area network.

6. Method according to any one of Claims 1 to 5, **characterized in that** the value of the severity score is bounded by the value 0 and the value 1.

7. Method according to any one of Claims 1 to 6, **characterized in that** each total severity score is bounded by the value 0 and the value 1 and is equal to the value 1 as soon as a severity score is equal to 1.

8. Method according to any one of Claims 1 to 7, **characterized in that** the recommendations are suggestions to move a station closer to a node of the local area network or to add a node to the local area network or to move a node of the local area network or to modify a channel to be used or to modify local algorithm thresholds that cause channel changes or to remove noise sources or to restore a configuration of the communication protocol, and the corrective actions are channel modifications or modifications of local algorithm thresholds that cause channel changes.

9. Device for detecting incidents in a local area network, the incident detection device being connected to the local area network via a wide area network, the local area network comprising a data collection agent collecting data describing the connections between stations and nodes of the local area network and data describing the connections between the nodes, the incident detection device being able to detect various types of anomaly and the incident detection device comprising:

- means for receiving messages from the collection agent, validating and aggregating the data describing the connections between the stations and the nodes and the data describing the connections between the nodes and contained in each received message into groups of data, the data being aggregated by partitioning the data with a predetermined periodicity, and:

- means for calculating, for each group of data and for each type of anomaly, a severity score on the basis of predetermined values representative of normal operation or behaviour, and calculating a total severity score for each group of data on the basis of the severity scores calculated for the group of data,
- means for calculating a total criticality score from all of the total severity scores for the aggregated groups of data during a predetermined duration, the predetermined duration being such that a plurality of groups of data are aggregated during the predetermined duration, the total criticality score being calculated on the basis of the sum of the total severity scores weighted by the duration of the groups of data,
- means for generating recommendation messages or corrective actions at least by analysing the total criticality score,

**characterized in that**:

if, within a partition, no change of operating feature of a link occurs, a group of data is formed, the group of data comprising all of the data of the partition and,
upon each change of at least one operating feature of a link within the partition, the operating feature of the link being the frequency band of the link, the communication protocol of the link and the channel of the link, a group of data is formed, which comprises the data of the partition corresponding to the frequency band of the link, to the communication protocol of the link and to the channel of the link.

10. Computer program product, **characterized in that** it comprises instructions for a node device to implement the method according to any one of Claims 1 to 8 when said program is executed by a processor of the node device.

11. Storage medium, **characterized in that** it stores a computer program comprising instructions for a node device to implement the method according to any one of Claims 1 to 8 when said program is executed by a processor of the node device.

**Fig. 1**

Fig. 2

G1　　　　G2　　　　G3

| | | | | | | | | | | | | | | | | | | | |
0　1　2　3　4　5　6　7　8　9　10　11　12　13　14　15　16　17　18　19　20

Fig. 3

400

| Temps total des connexions |
| Temps d'incidence d'incident |
401

| Criticité effective |
402

Fig. 4

E50 — Réception, validation et agrégation des données

E51 — Détection d'anomalies et calculs de scores de sévérité

E52 — Détection d'incidents et calcul des scores de santé

E53 — Calcul des scores de criticité évaluation fonctionnement du réseau local

E54 — Génération d'actions correctives

Fig. 5

**EP 4 013 013 B1**

**Documents brevets cités dans la description**

- US 2010274616 A
- US 2020267057 A
- US 2010027432 A